# EUROPEAN PATENT SPECIFICATION

(11) **EP 3 190 847 B1**
(45) Date of publication and mention of the grant of the patent: **22.07.2020**
(21) Application number: 17150691.8
(22) Date of filing: 09.01.2017
(51) Int. Cl.: H04W 72/04, H04W 8/24

(54) **CAPABILITY COST SIGNALLING**
KAPAZITÄTSKOSTENSIGNALISIERUNG
SIGNALISATION DE COÛT DE CAPACITÉ

(30) Priority: 08.01.2016 EP 16150571
(43) Date of publication of application: 12.07.2017
(73) Proprietor: IPCom GmbH & Co. KG, 82049 Pullach (DE)
(72) Inventor: HANS, Martin, 31162 Bad Salzdetfurth (DE); SCHMIDT, Andreas, 38124 Braunschweig (DE); BIENAS, Maik, 38170 Schöppenstedt (DE)
(74) Representative: Tomlinson, Edward James

(56) References cited:
- GB-A- 2 499 259
- US-A1- 2014 204 848
- US-A1- 2015 011 231

## Description

The present invention relates to radio resource control, RRC, signalling and in particular signalling during or after RRC connection setup.

User equipment, UE, radio capabilities are sent in RRC signalling during or after RRC connection setup in a so called UE capability information message as described in 3GPP TS 36.331. UE categories are described in tables 4.1-1, 4.1-2 and 4.1-3 of 3GPP TS 36.306, with each category having an associated set of parameter values for the downlink and uplink and a total layer 2 buffer size.

A change of UE capabilities when the UE is in a RRC connected state is not possible. If anything in the UE leads to a change of UE capabilities, the UE has to detach from the network and re-establish the RRC connection (go through Idle) and re-attach.

Capabilities that are signalled as supported by a UE have to be supported unconditionally. That is, the UE has to be prepared to support the worst-case. According to state of the art, a UE that is capable of supporting two resource demanding features (referred here for convenience as features F6 and F7) consecutively (but not simultaneously) is not able to signal this particular characteristic to the network.

For example, if 50% of the available resources are already utilized by the features F1 through F5 and each of the two additional resource demanding features (features F6 and F7) requires a share of another 40%, the UE may be able to support either features F1 through F5 plus F6 in a first configuration, or features F1 through F5 plus F7 in a second configuration but not a configuration in which features F1 through F7 are activated.

As advanced features are introduced into the LTE standard, the features are becoming more and more demanding in terms of resources utilization at the UE. A new work item has been proposed in 3GPP to respond to this and allow for temporary change of capabilities and adapt the signalling and network behaviour to support resource sharing in the UE. For example, see 3GPP document TDoc RP-150184 of meeting RAN#67. One proposed solution is to change the UE E-UTRA capability signalling to contain multiple UE E-UTRA capability sets, referred to as "profiles". To implement this, additional RRC signalling is required by the eNB to select a profile and signal this to the UE and RRC signalling by the UE to select a profile and signal this to the eNB.

US 2014/0204848 A1 would appear to be a more detailed description of the proposal described in the TDoc cited above.

Such an arrangement has significant drawbacks. Profiles need to be defined and standardized, thus the community of handset manufacturers, infrastructure vendors, and mobile network operators has to agree on features and feature combination to be realistic and efficient. Device manufacturers have to lay open their device capabilities, which is rarely done and prevented where possible. As a result, optimal results may not be agreed. Profiles will need to be fixed and therefore new hardware or implementation options can only be reflected after introduction of new profiles. To allow good flexibility, the number of profiles and resulting signalling options would have to be high.

GB 2499259 A describes a wireless communication system in which a base station analyses a user equipment's self-interference cancellation capability which may be determined in terms of a transmission power value required to provide a particular required sensitivity level at a particular frequency band. The UE sends the information as a UECapabilitylnformation message.

US 2015/0011231 A1 describes a radio resource management technique in which a radio resource is selected according to the requirements of the data to be transmitted.

The present invention proposes a different approach. The invention is defined by the appended claims.

In one aspect, the invention provides a method performed by a user equipment, UE, device for signalling a radio resource capability of the UE device to a base station, the method comprising determining a processing cost burden for each of one or more radio capabilities of the user equipment device, the processing cost burden being a numerical value representative of at least one of a computational power demand, a memory demand, a data throughput demand, and a radio bandwidth demand for implementing the radio capability; determining a maximum processing budget of the UE device; and transmitting one or more messages to the base station informing the base station as to the processing cost burdens of the radio capabilities and the maximum processing budget.

The maximum processing budget represents the maximum sum of the processing power demands of multiple respective radio resource capabilities the UE is capable of using concurrently according to a configuration by a base station.

In a further aspect, the invention provides a method performed in mobile communication network equipment of configuring a user equipment, UE device, the method comprising receiving one or more messages from the UE device, the one or more messages containing information concerning a maximum processing budget of the UE device and a processing cost burden for each of one or more radio capabilities of the user equipment device, the processing cost burden being a numerical value representative of at least one of a computational power demand, a memory demand, a data throughput demand, and a radio bandwidth demand for implementing the radio capability; and assigning radio resources to the UE device such that a sum of the processing cost burdens for radio capabilities required for the radio resources to be assigned do not exceed the maximum processing budget of the user equipment device.

The invention includes giving features that may compete for device resources effectively a "price tag", i.e. a figure (a number) within the capability signalling. In addition, the UE signals its individual total budget for valid UE configurations.

The network, upon deciding about an appropriate UE configuration, takes the sum of the costs of any configuration into account in that it only uses configurations that will not exceed the communicated budget.

The cost signalling can have an absolute additive or multiplied/relative additive meaning. The absolute meaning would simply add respective costs to a specific configuration if a feature is configured to be used by a UE in that configuration. The relative meaning would add costs to a specific configuration that are calculated by a given cost factor and other elements of that configuration. For example, the cost can be give per aggregated carrier, so that a given cost factor is multiplied by the number of configured carriers and the calculated costs of the feature for multiple carriers are added.

With the invention a dynamic change of capabilities can take place and respective signalling of changed capabilities can be done by the UE simply by signalling a new feature combination budget.

Aspects of the invention will now be described, by way of example only.

In the invention, "costs" of particular features, examples of which being given in table 1, are signalled by a UE to the eNB.

The "costs" signalled with the capabilities are numerical values representative of processing power demands which an implementation of the radio capabilities would exert on the UE device processor. The processing power demand which would be required by a UE device processor for implementation of the radio capability relates to the computational power demand or the memory demand of the implementation or a data throughput demand or a radio bandwidth demand of the radio capability. The "costs" of individual features are defined by a device manufacturer in a way suitable to numerically separate supported feature combinations from unsupported combinations. This is reflected in table 1 and 2.

**Table 1**

| **Feature** | **Subfeature** | **Costs** | **Absolute vs. relative** |
|---|---|---|---|
| **Carrier Aggregation (CA)** | 2 x 5 MHz | 15 | absolute |
| | 3 x 5 MHz | 18 | absolute |
| | 4 x 5 MHz | 24 | absolute |
| | 2 x 10 MHz | 20 | absolute |
| | 3 x 10 MHz | 23 | absolute |
| | 4 x 10 MHz | 30 | absolute |
| | 2 x 20 MHz | 25 | absolute |
| **Network Assisted Interference Cancellation (NAIC)** | | 5 | Relative (Per carrier in CA with NAIC configured) |
| **UE Category (as defined in LTE)** | 1 | 0 | |
| | 2 | 0 | |
| | 3 | 0 | |
| | 4 | 0 | |
| | 5 | 10 | absolute |
| | 6 + 4 | 15 | absolute |
| | 7 + 4 | 20 | absolute |
| | 8 + 5 | 25 | absolute |
| | 9 + 6 + 4 | 30 | absolute |
| | 10 + 7 + 4 | 30 | absolute |
| | 11 + 9 + 6 + 4 | 35 | absolute |
| | 12+ 10 + 7 + 4 | 35 | absolute |
| | 13 + 6 + 4 | 40 | absolute |
| | 14 + 7 + 4 | 40 | absolute |
| | 15 + 8 + 5 | 40 | absolute |
| **LAA (LTE in unlicensed (WiFi) bands)** | 20 MHz / <100 Mbps in unlicensed | 4 | absolute |
| | 20 MHz / >100 Mbps in unlicensed | 6 | absolute |

**Table 2**

| **CA** | **UE Cat** | **NAIC** | **LAA** | **Total costs** | **Support (based on 75 budget)** |
|---|---|---|---|---|---|
| **2 x 5 MHz** | 5 | 1C | <100 | 34 | Support |
| **2 x 10 MHz** | 5 | 1C | >100 | 41 | Support |
| **2 x 20 MHz** | 5 | 2C | >100 | 46 | Support |
| **2 x 10 MHz** | 8 | 1C | - | 50 | Support |
| **3 x 5 MHz** | 8 | 1C | <100 | 52 | Support |
| **3 x 10 MHz** | 8 | 2C | >100 | 64 | Support |
| **3 x 10 MHz** | 12 | 1C | - | 63 | Support |
| **2 x 20 MHz** | 12 | 1C | - | 65 | Support |
| **4 x 10 MHz** | 12 | 2C | >100 | 81 | No |
| **4 x 10 MHz** | 12 | | >100 | 71 | Support |
| **3 x 10 MHz** | 15 | 1C | - | 68 | Support |
| **2 x 20 MHz** | 15 | 2C | <100 | 79 | No |
| **4 x 10 MHz** | 15 | 3C | >100 | 91 | No |
| **4 x 10 MHz** | 15 | | <100 | 74 | Support |

Table 1 shows examples of categories of features (as defined in Rel-12 of the LTE standard) with their costs and whether these are absolute or relative to any other parameter. Table 2 shows examples of supported and unsupported feature combinations and the corresponding calculation based on a budget of 75.

As may be seen from table 2, in the given examples, three combinations of features would not be supported by the exemplary UE, since this would exceed the total actual budget whereas each feature may be configured in a less resource demanding configuration.

For another type of UE from a different manufacturer, possible with a different processor, the tables 1 and 2 might look different.

A change of capabilities of the UE during operation would need the UE to only signal a new budget value. If for example the UE is suffering from heavy computation caused by receiving and decoding a high bandwidth WiFi video-stream (which is not visible to the cellular network), it may reduce the feature budget for LTE to ensure enough resources for the video processing and WiFi reception. On the other hand, if a situation arises which cause the WiFi connection to break and the video processing is in danger of stopping, the LTE capabilities may be moderately increased to allow maximum data rate from LTE to continue video streaming via the cellular module.

The budget calculation and decision may depend on various parameters, for example computational resources (processing power), temperature constraints of the device (reducing heat by limiting computation), memory size, battery charge state (reducing computational resource if the battery charge is reaching a critical level), radio resources supported (max bandwidth, specific frequency bands, ...), overall data rate, i.e. decoding or coding limitations, and limitations of the protocol stack.

The invention provides for a mobile device signalling its capabilities to the infrastructure side including cost elements and a (possibly dynamic) total individual budget, and a base station receiving the capabilities from the mobile device including the cost elements and the budget.

The base station in addition performs a feature selection process in order to determine a device specific configuration that will not exceed the currently available individual budget to be sent to the mobile device. The selection is done taking the capabilities, the cost of (potentially) selected features and the total individual budget into account.

The invention also relates to link establishment including the above mentioned capability, cost and budget signalling. The link is established between a mobile device and one or more base stations. The invention also relates to an adaption of a link already established. The adaption includes by a mobile device to transmit during operation (i.e. while an RRC Connection is active) a new total individual budget value to a base station in a message and by the base station (in reply to the dynamic budget indication received from the mobile device) to immediately adapt the device configuration or to take the new total individual budget into account for configuration at a later point in time.

Alternatively or additionally, the capability cost signalling can use multiple cost values for each capability competing for resources. The multiple cost values can correspond to different resource instances (dimensions), e.g. memory size, processing power, radio capabilities, etc. In that case multiple budget values can ensure that feature configurations selected by the network don't exceed the available resources for any of the resource instances.

Similar to the case of a single cost value per capability, a communication standard would not need to specify to which actual resource the multiple cost values correspond. Even the number of signalled cost values could be variable so that one UE can communicate a single cost value for feature F6, no cost value for feature F7 and a single budget value whereas another UE communicates two cost values for feature F6, one for feature F7 and two budget values.

The principle of the invention is that for some capabilities (supported optional features) cost values are communicated to the network and a total budget value is communicated to be taken into account when selecting a configuration in the network. The costs and the budget can be communicated in a single value or multiple values and they can have clear correspondence to units of resources in the real world or they can be just numerical values without such correspondence.

The preferred embodiment uses a single cost value per capability for resource demanding capabilities, no cost values for other capabilities and a single total budget value for a UE at a time.

The invention provides a much simpler and more flexible solution than a combination of grouping capabilities into profiles and dynamic signalling of supported or unsupported profiles. With the number of capabilities steadily increasing, the number of profiles may increase even more and signalling burden for profiles may exceed the benefit. Also, definition of profiles would require the standardization community to agree on such profiles or at least (groups of) capabilities that may be signalled to be in profiles. The effort of standardization and the reluctance of manufacturers to open their hardware and software weaknesses to the outside further reduce the value of profiles.

On the other hand the proposed simple cost signalling allows manufacturers to add figures to their capabilities that do not easily allow back tracking of hardware or software weaknesses and (even more important) do not require any manufacturer to openly discuss specific capabilities to be in or out the profile signalling.

In the following, an exemplary embodiment of UE capability cost signalling is given with change marks against the current message structure of UE capability signalling for LTE, as given in 3GPP TS 36.331:

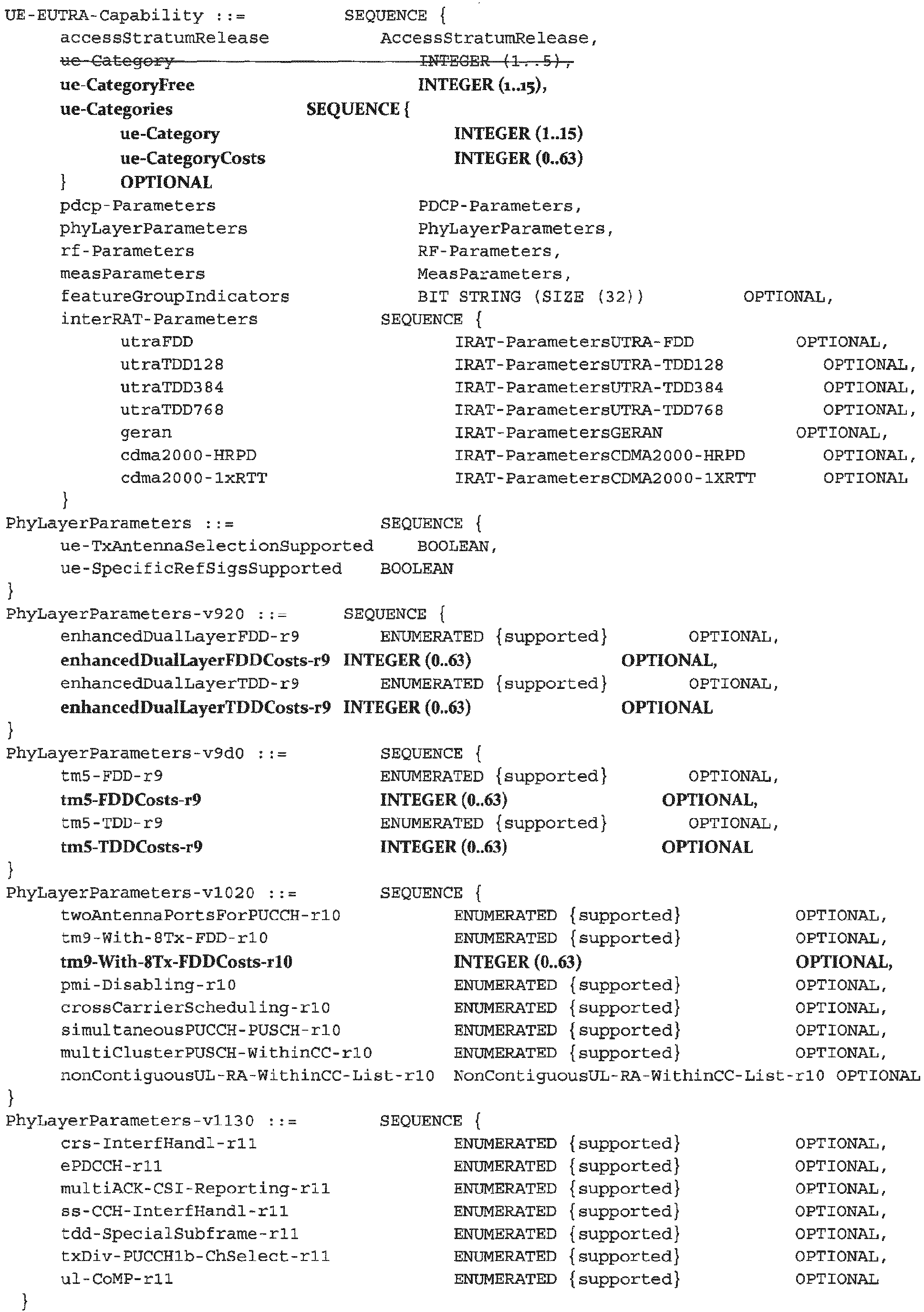

The addition to the existing capability signalling is shown above (in bold): Capability signalling may be enhanced by a cost element for features that are resource demanding and compete with other features for limited resources. Some features, which have been signalled in a single of multiple code points, like the UE category above, may be enhanced by multiple code points with respective costs to offer a choice to the base station. At least one code point may be signalled as free of costs ("ue-CategoryFree" in the above list), which could be a minimum capability that works well with all other configurations.

The definition of the information element (IE) UE-EUTRA-Capability above describes the contents by the way of sub-information-elements that may be of elementary type, like INTEGER (...) or referenced by type name that is defined as IEs subsequently.

The first change that describes the deployment of this invention is replacement of the legacy indication of a single UE category by the indication of a UE category, that can be configured by the network without taking feature costs into account (ue-CategoryFree), and an optional additional UE category with a respective cost value. The cost value is signalled example wise as an integer value between zero and 63 so that they can be coded with 6 bit in the respective signalling messages to the base station. The base station will take the cost value into account if a UE category is configured that is not for free and add the costs to those of configured specific features that are independent of the UE category.

A further change is an additional IE to the enhancedDualLayer capability signalled independently for the FDD and TDD mode. This field defines whether the UE supports enhanced dual layer (PDSCH transmission mode 8) for FDD or TDD respectively and the invention proposes to add a optional cost burden as a 6 bit integer value to these capabilities.

In a similar way, optional cost values for the lEs that defines whether the UE supports PDSCH transmission mode 5 for FDD and TDD respectively may be included.

The last change is the addition of similar costs for the capability that defines whether the UE supports PDSCH transmission mode 9 with 8 CSI reference signal ports for FDD.

All of the described cost value are optional so that device manufacturers can decide whether the specific capability puts a burden on the UE that requires a cost signalling or not. If the IE is not present, the configuration of the feature will not increase the total costs of a complete UE configuration.

The integer value range of 0 to 63 is chosen arbitrarily and may in fact be broader, e.g. 0 to 127, or more narrow, e.g. 0 to 15, so that the coding of values may also use more or less than the proposed 6 bit.

## Claims

1. A method performed by a user equipment, UE, device for signalling a radio resource capability of the UE device to a base station, the method comprising:
determining a processing cost burden for each of a plurality of radio capabilities of the user equipment device, the processing cost burden being a numerical value representative of at least one of a computational power demand, a memory demand, a data throughput demand, and a radio bandwidth demand for executing the radio capability;
determining a maximum processing budget of the UE device, the maximum processing budget being a numerical value indicative of a maximum sum of processing cost burdens of a plurality of the radio capabilities which the UE device in response to a configuration by the base station is capable of executing concurrently ; and
transmitting one or more messages to the base station informing the base station as to the processing cost burdens of the radio capabilities and the maximum processing budget in order for the base station to perform the configuration.

2. The method according to claim 1, wherein the UE device transmits an updated maximum processing budget in response to a change in one or more operating parameters.

3. The method according to claim 2, wherein the operating parameters comprise one or more of:
an available computational resource,
an operating temperature constraint,
available memory capacity,
supported radio resources,
an overall data rate, and
a battery charge state.

4. The method according to any one of claims 1 to 3, wherein the maximum processing budget provides an indicator as to which radio capabilities may be implemented based on their processing cost burden.

5. A user equipment device adapted to perform the method of any one of claims 1 to 4.

6. A method performed by a mobile communication network equipment of configuring a user equipment, UE device, the method comprising:
receiving at a base station one or more messages from the UE device, the one or more messages containing information concerning a maximum processing budget of the UE device and a processing cost burden for each of a plurality of radio capabilities of the user equipment device, the maximum processing budget being a numerical value indicative of a maximum sum of processing cost burdens of a plurality of the radio capabilities which the UE device in response to a configuration by the base station is capable of executing concurrently and the processing cost burden being a numerical value representative of at least one of a computational power demand, a memory demand, a data throughput demand, and a radio bandwidth demand for implementing the radio capability; and
assigning by the base station radio resources to the UE device such that a sum of the processing cost burdens for radio capabilities required for the radio resources to be assigned do not exceed the maximum processing budget of the user equipment device.

7. The method according to claim 6, wherein the mobile communication network equipment maintains a current value of the maximum processing budget and the radio capability processing cost burden for the UE device.

8. The method according to claim 7, wherein the mobile communication network equipment responds to changes in either the maximum processing budget or the radio capability processing cost burden for the UE device and if necessary performs a change to the assigned radio resources.

## Patentansprüche

1. Verfahren, das von einer Benutzerausrüstungs, UE (User Equipment), -Vorrichtung zum Signalisieren einer Funkressourcenfähigkeit der UE-Vorrichtung an eine Basisstation durchgeführt wird, wobei das Verfahren umfasst:
Bestimmen einer Verarbeitungskostenbelastung für jede von mehreren Funkfähigkeiten der Benutzerausrüstungs-Vorrichtung, wobei die Verarbeitungskostenbelastung ein numerischer Wert ist, der für wenigstens eines von einem Rechenleistungsbedarf, einem Speicherbedarf, einem Datendurchsatzbedarf und einem Funkbandbreitenbedarf für die Ausführung der Funkfähigkeit repräsentativ ist;
Bestimmen eines maximalen Verarbeitungsbudgets der UE-Vorrichtung, wobei das maximale Verarbeitungsbudget ein numerischer Wert ist, der eine maximale Summe von Verarbeitungskostenbelastungen von mehreren der Funkfähigkeiten angibt, die die UE-Vorrichtung in Reaktion auf eine Konfiguration durch die Basisstation gleichzeitig ausführen kann; und
Senden einer oder mehrerer Nachrichten an die Basisstation, die die Basisstation über die Verarbeitungskostenbelastungen der Funkfähigkeiten und das maximale Verarbeitungsbudget informieren, damit die Basisstation die Konfiguration durchführen kann.

2. Verfahren gemäß Anspruch 1, wobei die UE-Vorrichtung in Reaktion auf eine Änderung eines oder mehrerer Betriebsparameter ein aktualisiertes maximales Verarbeitungsbudget sendet.

3. Verfahren gemäß Anspruch 2, wobei die Betriebsparameter eines oder mehrere der folgenden umfassen:
eine verfügbare Rechenressource,
eine Einschränkung der Betriebstemperatur,
eine verfügbare Speicherkapazität,
unterstützte Funkressourcen,
eine Gesamtdatenrate, und
einen Batterieladezustand.

4. Verfahren gemäß einem der Ansprüche 1 bis 3, wobei das maximale Verarbeitungsbudget einen Indikator dafür bereitstellt, welche Funkfähigkeiten implementiert werden können, basierend auf ihrer Verarbeitungskostenbelastung.

5. Benutzerausrüstungs-Vorrichtung, die dafür ausgelegt ist, das Verfahren nach einem der Ansprüche 1 bis 4 durchzuführen.

6. Verfahren, das von einer Mobilkommunikationsnetz-Ausrüstung zum Konfigurieren einer Benutzerausrüstungs, UE, -Vorrichtung durchgeführt wird, wobei das Verfahren umfasst:
Empfangen einer oder mehrerer Nachrichten von der UE-Vorrichtung an einer Basisstation, wobei die ein oder mehreren Nachrichten Informationen über ein maximales Verarbeitungsbudget der UE-Vorrichtung und eine Verarbeitungskostenbelastung für jede von mehreren Funkfähigkeiten der Benutzerausrüstungs-Vorrichtung enthalten, wobei das maximale Verarbeitungsbudget ein numerischer Wert ist, der eine maximale Summe von Verarbeitungskostenbelastungen von mehreren der Funkfähigkeiten angibt, die die UE-Vorrichtung in Reaktion auf eine Konfiguration durch die Basisstation gleichzeitig ausführen kann, und wobei die Verarbeitungskostenbelastung ein numerischer Wert ist, der für wenigstens eines von einem Rechenleistungsbedarf, einem Speicherbedarf, einem Datendurchsatzbedarf und einem Funkbandbreitenbedarf für die Implementierung der Funkfähigkeit repräsentativ ist; und
Zuweisen von Funkressourcen durch die Basisstation an die UE-Vorrichtung, so dass eine Summe der Verarbeitungskostenbelastungen für Funkfähigkeiten, die für die zuzuweisenden Funkressourcen benötigt wird, das maximale Verarbeitungsbudget der Benutzerausrüstungs-Vorrichtung nicht übersteigt.

7. Verfahren gemäß Anspruch 6, wobei die Mobilkommunikationsnetz-Ausrüstung einen aktuellen Wert des maximalen Verarbeitungsbudgets und der Verarbeitungskostenbelastung der Funkfähigkeiten für die UE-Vorrichtung pflegt.

8. Verfahren gemäß Anspruch 7, wobei die Mobilkommunikationsnetz-Ausrüstung auf Änderungen entweder des maximalen Verarbeitungsbudgets oder der Verarbeitungskostenbelastung der Funkfähigkeiten für die UE-Vorrichtung reagiert und bei Bedarf eine Änderung der zugewiesenen Funkressourcen durchführt.

## Revendications

1. Procédé, réalisé par un dispositif équipement utilisateur, noté UE, de signalisation d'une capacité de ressources radio du dispositif UE à une station de base, le procédé comprenant :
la détermination d'une charge de coûts de traitement pour chacune d'une pluralité de capacités radio du dispositif équipement utilisateur, la charge de coûts de traitement consistant en une valeur numérique représentant au moins un élément dans le groupe constitué par une demande de puissance de calcul, une demande de mémoire, une demande de débit de données et une demande de largeur de bande radio pour l'exécution de la capacité radio ;
la détermination d'un budget de traitement maximal du dispositif UE, le budget de traitement maximal consistant en une valeur numérique indiquant une somme maximale de charges de coûts de traitement d'une pluralité des capacités radio que le dispositif UE, en réponse à une configuration par la station de base, est capable d'exécuter simultanément ; et
la transmission, à la station de base, d'un ou de plusieurs messages informant la station de base des charges de coûts de traitement des capacités radio et du budget de traitement maximal pour permettre à la station de base de réaliser la configuration.

2. Procédé selon la revendication 1, dans lequel le dispositif UE transmet un budget de traitement maximal actualisé en réponse à une modification d'un ou de plusieurs paramètres de fonctionnement.

3. Procédé selon la revendication 2, dans lequel les paramètres de fonctionnement comprennent un ou plusieurs des éléments suivants :
une ressource de calcul disponible,
une contrainte de température de fonctionnement,
une capacité mémoire disponible,
des ressources radio prises en charge,
une vitesse de transmission de données globale, et
un état de charge de batterie.

4. Procédé selon l'une quelconque des revendications 1 à 3, dans lequel le budget de traitement maximal fournit un indicateur de celles des capacités radio qui peuvent être mises en œuvre sur la base de leur charge de coûts de traitement.

5. Dispositif équipement utilisateur adapté à réaliser le procédé selon l'une quelconque des revendications 1 à 4.

6. Procédé, réalisé par un équipement de réseau de communication mobile, de configuration d'un dispositif équipement utilisateur, noté UE, le procédé comprenant :
la réception, au niveau d'une station de base, d'un ou de plusieurs messages depuis le dispositif UE, les un ou plusieurs messages contenant des informations concernant un budget de traitement maximal du dispositif UE et une charge de coûts de traitement pour chacune d'une pluralité de capacités radio du dispositif équipement utilisateur, le budget de traitement maximal consistant en une valeur numérique indiquant une somme maximale de charges de coûts de traitement d'une pluralité des capacités radio que le dispositif UE, en réponse à une configuration par la station de base, est capable d'exécuter simultanément et la charge de coûts de traitement consistant en une valeur numérique représentant au moins un élément dans le groupe constitué par une demande de puissance de calcul, une demande de mémoire, une demande de débit de données et une demande de largeur de bande radio pour la mise en œuvre de la capacité radio ; et
l'assignation, par la station de base, de ressources radio au dispositif UE de sorte qu'une somme des charges de coûts de traitement pour des capacités radio requises pour les ressources radio à assigner ne dépasse pas le budget de traitement maximal du dispositif équipement utilisateur.

7. Procédé selon la revendication 6, dans lequel l'équipement de réseau de communication mobile tient à jour une valeur courante du budget de traitement maximal et de la charge de coûts de traitement des capacités radio pour le dispositif UE.

8. Procédé selon la revendication 7, dans lequel l'équipement de réseau de communication mobile réagit à des modifications soit du budget de traitement maximal, soit de la charge de coûts de traitement de capacités radio pour le dispositif UE et, au besoin, procède à une modification des ressources radio assignées.
